# EUROPEAN PATENT SPECIFICATION

(11) **EP 4 044 017 B1**
(45) Date of publication and mention of the grant of the patent: **24.06.2026**
(21) Application number: 22163273.0
(22) Date of filing: 02.08.2016
(51) Int. Cl.: G06F 3/12, H04W 4/00, H04W 4/80, H04W 84/12

(54) **INFORMATION PROCESSING APPARATUS, COMPUTER PROGRAM, AND INFORMATION PROCESSING METHOD**
INFORMATIONSVERARBEITUNGSVORRICHTUNG, COMPUTERPROGRAMM UND INFORMATIONSVERARBEITUNGSVERFAHREN
APPAREIL DE TRAITEMENT D'INFORMATIONS, PROGRAMME INFORMATIQUE ET PROCÉDÉ DE TRAITEMENT D'INFORMATIONS

(30) Priority: 18.03.2016 JP 2016055261
(43) Date of publication of application: 17.08.2022
(62) Divisional of application: 16182464.4
(73) Proprietor: FUJIFILM Business Innovation Corp., Minato-ku Tokyo (JP)
(72) Inventor: OMORI, Satoshi, Yokohama-shi, Kanagawa (JP)
(74) Representative: Haseltine Lake Kempner LLP

(56) References cited:
- US-A1- 2015 029 535

## Description

### BACKGROUND

### (i) Technical Field

The present invention relates to an information processing apparatus, a computer program, and an information processing method.

### (ii) Related Art

JP-A-2014-139823 discloses a cloud-based printing service mechanism. In this mechanism, a print server is configured to receive a print request issued from an application program through a network, and receive a printer that is selected on a print dialog which is provided to the user of the application program through the network and causes the user to select at least a single printer which is associated with the user account of the user. A format conversion unit is configured to receive a print job for designating the selected printer in which the print job includes print data and print characteristics which are expressed in a first format, and to convert the received print job from the first format into a printer-specific format, which is associated with the selected printer. A print job router performs routing of the print job from the print server, through the network, to a print client which is associated with the selected printer, by using the printer-specific format. This mechanism is used in a print service called a Google Cloud Print that a Google (registered trademark) company provides.

JP-A-2015-108925 discloses a mechanism of providing print data from a system to an image forming apparatus so as to print the print data, in which the image forming apparatus is not previously registered by a user to the system as own printer to use. In this mechanism, the user performs a user authentication for a cloud print service with a mobile device and acquires an access token to register the image forming apparatus. When the mobile terminal is brought close to the image forming apparatus, the access token is provided from the mobile terminal to the image forming apparatus over proximity wireless communication. The image forming apparatus sends a setting request including its access token and its own physical printer ID to the cloud print service. In response to the setting request, the cloud print service generates and stores setting information allowing the user to temporarily use the image forming apparatus.

JP-A-2015-108950 discloses a system in which when a mobile terminal is brought close to an image forming apparatus, the mobile terminal is notified of the physical printer ID of the image forming apparatus from the image forming apparatus over proximity wireless communication. The mobile terminal sends a setting request including its physical printer ID and the user ID of a user to the cloud print service. In response to the setting request, the cloud print service generates and stores setting information allowing the user to temporarily use the image forming apparatus. US 2015/029535 A1 describes a service providing system that includes one or more information processing apparatuses and that is configured to provide a service to a service using device such as a printer connected to the service providing system via a network. The service providing system comprises a management information storage unit configured to store management information including an association between service identification information of the service, user identification information of a user using the service, and device identification information of the service using device.

### SUMMARY

The claimed invention is defined in the appended claims.

According to the aspects of the invention and the other aspects, it is possible to suppress a response process by using user information which is not intended by the user, among the plural pieces of user information stored in the information processing apparatus, during the response process for confirmation information to the service providing system.

### BRIEF DESCRIPTION OF THE DRAWINGS

The foregoing and additional features and characteristics will become more apparent from the following detailed descriptions considered with the reference to the accompanying drawings, wherein:
FIG. 1 is a diagram illustrating an example of a configuration of a system employing an aspect of an exemplary embodiment;
FIG. 2 is a diagram illustrating an example of a flow of registering a printer to a cloud service in the related art;
FIG. 3 is a diagram illustrating an example of a functional configuration of a mobile terminal according to a first example;
FIG. 4 is a diagram illustrating an example of a flow of registering the printer to the cloud service according to the first example;
FIG. 5 is a diagram illustrating an example of a functional configuration of a mobile terminal according to a second example;
FIG. 6 is a diagram illustrating an example of a flow of registering the printer to the cloud service according to the second example;
FIG. 7 is a diagram illustrating an example of a functional configuration of a mobile terminal according to third and fourth examples;
FIG. 8 is a diagram illustrating an example of a flow of registering the printer to the cloud service according to the third example; and
FIG. 9 is a diagram illustrating an example of a flow of registering the printer to the cloud service according to the fourth example.

### DETAILED DESCRIPTION

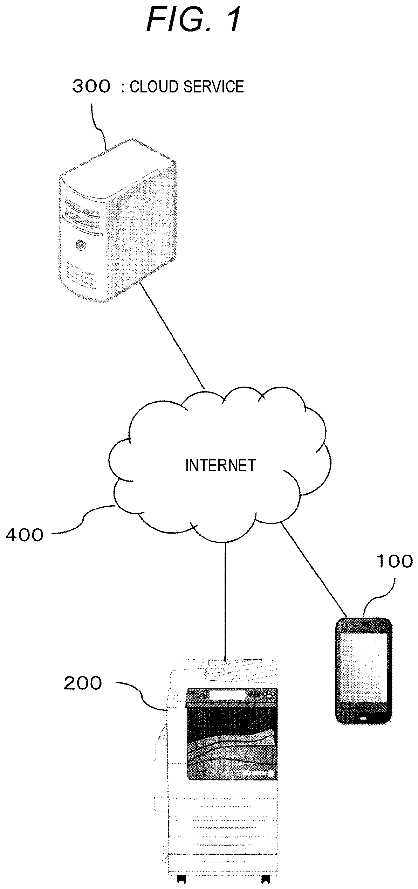

An example of a configuration of a system employing an aspect of an exemplary embodiment will be described with reference to FIG. 1. The illustrated system includes a mobile terminal 100, a printer 200, and a cloud service 300, which are able to communicate with each other through the Internet 400.

The mobile terminal 100 is an information processing apparatus that the user carries, and a smartphone and a tablet terminal are an example thereof. The mobile terminal 100 has a function of making a connection to the Internet 400, through a wireless local area network (LAN) or a mobile telephone network. The mobile terminal 100 has a proximity communication function that conforms to the Near Field Communication (NFC) standard or the Bluetooth (registered trademark) Low Energy (BLE) standard.

The printer 200 prints print data received through the network, on the paper sheet. The printer 200 is connected to the Internet 400 through a LAN or the like. The printer 200 has a proximity communication function conforming to the NFC standard.

The cloud service 300 is a system that provides a service to the user by cloud computing on a network such as the Internet 400. Various cloud services 300 that provide various services to the user are present on the Internet 400. Examples of the cloud services 300 are Google (registered trademark) Docs that provides a document management service, Google Cloud Print that provides a printing service, Facebook (trademark) or twitter (trademark) that provides a social networking service (SNS), and the like. In the following, a description will be given on the case where the cloud service 300 is intended to provide a printing service, as a representative example.

The cloud service 300, which provides a printing service, provides to the user, for example, a function of converting document data that is designated by a user as a print target (for example, data made by a word processor or spreadsheet software) into print data of a print data format that can be handled by the printer 200 (for example, a page description language format such as PostScript (registered trademark)), or a PDF format, a function of generating a print job corresponding to a received print instruction and managing the execution state (for example, a queue management), and the like.

If the user wants to use the printer 200 in printing in the cloud service 300, the user registers the printer 200 in the cloud service 300, in association with the user account of the user (user information, hereinafter, simply referred to as "account"). Accordingly, the user logs in to own account of the cloud service 300, and instructs printing so as to send a print instruction to the printer 200, at anywhere in an environment in which a connection to the Internet 400 is possible.

In a case where the cloud service 300 is, for example, Google Cloud Print (hereinafter, abbreviated as "GCP"), the user registers the printer 200 in association with own Google account (the account that the user registers in a Google web service). In the version 1.1 of GCP (hereinafter, referred to as "GCP1.1"), a "printer registration" instruction is made through the user interface (UI) of the printer supporting the GCP. During the registration instruction process, the account is not designated. If the instruction is made, the printer accesses the GCP, print data indicating the URL of the registration web page associated with the identification information of the printer is sent from the GCP to the printer in response thereto and is printed-out. The user accesses the URL indicated on the printed output via the browser installed in own personal computer (PC). If the user enters own Google account and password on the registration web page that is displayed by the above process and authentication is successful, the printer is registered in the GCP in association with the account of the user.

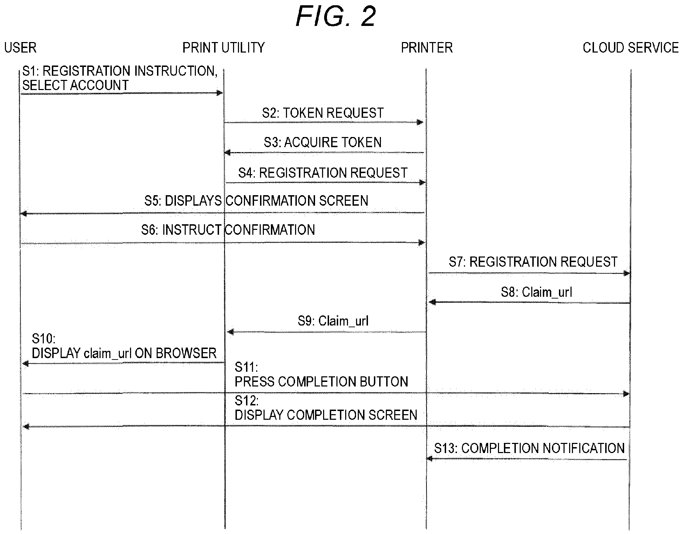

In addition, GCP2.0 which is the new version of the GCP, the client can make a request for the GCP registration to the printer in the local network. The flow of this registration process will be described with reference to FIG. 1 and FIG. 2.

The information on the account that user has for the cloud service 300 is stored in the mobile terminal 100 of the user. A single user may register and has plural accounts for a single cloud service 300. There is a case where tools managing plural accounts, such as a web browser, are installed in the mobile terminal 100. For example, an account management tool called an account manager is prepared in the Android (trademark) operating system. The account manager stores, for each service, the information on the account that user registers for the service, and provides the information on the account depending on the request of the application program. For example, the account that the user registers in the Google is used to use services that the Google provides, such as GCP and Google Docs.

(S1) In the flow of FIG. 1, at first, the user gives an instruction to register the printer 200 in the cloud service 300 (in this example, GCP), on the print utility application (hereinafter, abbreviated as print utility) in the mobile terminal 100.

The process for this instruction is started by the user tapping to the NFC port of the printer 200 in the mobile terminal 100 (an operation of moving the finger until it contacts). The mobile terminal 100 and the printer 200 perform NFC communication by the tapping operation, and the print utility in the mobile terminal 100 is started in response to this NFC communication. The print utility receives a NFC data exchange format (NDEF) message from the printer 200 through the NFC communication. The message includes the IP address of the printer 200. The print utility attempts to communicate with the printer 200 through the local network, such as a wireless LAN, by using the IP address. In a case where this communication is successful, the print utility acquires printer information such as SysOID which is the identification information of the printer 200 (an object ID specific to the printer 200 that the manufacturer of the printer 200 grants) and the model name, from the printer 200, and saves this printer information as information on "registered printer".

After the printer information is saved, the print utility acquires the information on the state of the printer 200, and displays it on a screen. The information displayed at this time includes a GCP registration status indicating whether the printer 200 is already registered or is unregistered for the GCP. If the value of the GCP registration status is "unregistered", the user can instruct the print utility to register the printer 200 in the GCP. If the user performs this registration instruction, the print utility acquires the Google account registered in the account manager in the mobile terminal 100. At this time, in a case where the plural Google accounts are registered in the account manager, the print utility displays a selection dialog indicating the plural accounts on the screen so as to cause the user to select whether to use any account.

(S2) After this selection is made, the print utility makes a request for a Privet token to the printer 200. The Privet token is a token that is required to use the Privet application programming interface (API) that is used for communication in the GCP between client printers, and is issued by the printer 200 after receiving permission from the GCP.

(S3) The printer 200 issues the Privet token, in response to the request from the mobile terminal 100 (print utility).

(S4) The print utility sends a GCP registration request, together with the Privet token received from the printer 200 and the account selected in (S1), to the printer 200.

(S5) The printer 200 displays a confirmation screen for asking confirmation if the user really wants registration, on its own UI screen. A string that represents the account included in the GCP registration request (for example, the e-mail address of Gmail), a message asking whether to register the printer 200 in this account, and a graphical user interface (GUI) button for instructing the approval or rejection for the asking are displayed on the confirmation screen.

(S6) The user checks the display contents of the confirmation screen, and presses the approval button on the confirmation screen.

(S7) If the user presses the approval button on the confirmation screen, the printer 200 sends a registration request to the GCP (cloud service 300). The registration request includes the Google account selected in (S1), and the printer name, the model name, the manufacturer name, the corresponding GCP version, and a universally unique identifier (UUID) of the printer 200.

(S8) The cloud service 300 (GCP) which receives the registration request registers the information that is included in the request in its own database. If the registration is completed, the GCP generates two URLs of claim_url and automated_claim_url in order to perform the registration completion process. The claim_url is the URL of the registration confirmation web page that is generated by GCP for registration confirmation for the printer 200 that is registered in the database at this time. The registration confirmation web page is the web page by which the user expresses the intention of the confirmation of the registration completion, and includes a GUI button (referred to as "completion button") for the user to express the intention of confirmation. The automated_claim_url is a URL used in a case where the application program automatically performs a confirmation process for the registration completion but the user does not. The two generated URL are associated with information on the printer 200 (information received from the printer 200 in S7) registered earlier in the database.

The GCP returns the generated claim_url and automated_claim_url, to the printer 200 which is the transmission source of the registration request.

(S9) The printer 200 receives the claim_url and the automated_claim_url from the GCP, and transfers these received URLs to the mobile terminal 100 (print utility) that performed the registration request of (S4). In the example of FIG. 1, the print utility calls and instructs the web browser to access the claim_url, without a processing function of responding to the automated_claim_url.

(S10) The web browser of the mobile terminal 100 accesses the claim_url to acquire the registration confirmation web page corresponding to the claim_url from GCP, and displays the acquired web page on the screen.

Here, the registration confirmation web page indicated by the claim_url is present in the Google (or GCP), and it is necessary to log in to the Google in order to access the web page. As one of the functions that the web browser has, there is a function of, in a state where an account used at the time of log-in to the site is saved as a default account, performing automatic log-in by using the default account, or assisting the input when the user logs in by automatically entering the default account on the log-in screen of the site, at the next access time to the site. Note that the default account may be the form of the account information (a set of a user ID and a password), or a session ID or the like that is passed to the web browser that the Google authenticates login. The session ID is stored as a cookie in the web browser 102. Since the Google manages the session ID in association with the account for which log-in is permitted, the web browser 102 is able to realize the next automatic log-in by using the cookie. Hereinafter, the automatic log-in function or a log-in assisting function using the default account which is described above is referred to as "automatic log-in" function. If the automatic log-in function of the web browser is enabled and the default account for the Google remains in the web browser, the web browser logs in to the Google with the default account without user intervention, during an access to the claim_url (a case of fully automatic log-in). Alternatively, the web browser automatically sets and displays the user ID and the password of the default account, on the log-in screen that is returned from the Google, and if the user presses the "send button" on the screen without changing the user ID and the like, the log-in to the Google is performed with the default account. Even though the automatic log-in function is enabled, if information on the default account for the Google does not remain in the web browser, a log-in screen for an access to the claim_url is returned from the Google side, and the user enters own account information (the user ID and the password) on the log-in screen displayed in the web browser, and receives log-in authentication. In any case, after a successful log-in, a registration confirmation web page is provided to the web browser from the GCP side.

(S11) The user checks the information displayed on the displayed registration confirmation web page, and if the user confirms that the printer 200 is to be registered, the user presses the completion button on the page. Thus, the registration completion instruction is transmitted to the GCP from the web browser. Upon receiving the registration completion instruction, the GCP registers the printer 200 which is the instruction target, in association with the account that the user logs in at the time of the instruction.

(S12, S13) After the registration process, the GCP returns the completion screen web page indicating the completion of registration to the web browser of the mobile terminal 100, and sends a completion notification to the printer 200.

Through the above flow, the printer 200 is registered in the GCP in association with the account that is logged-in to the GCP at the time of pressing the completion button of S11, and thereafter, it is possible to control the printer 200 from the account.

In printer registration flow described above, the account that the user selects in S1 does not necessarily match the default account that is used when the automatic log-in is made to the GCP in S10. When the user selects the account in S1 of the printer registration, the user does not always remember the account when the user logs in to the Google last time, and the user may want to perform printer registration with a different account for any reason in some cases, even if the user remembers the account. If the default account at the time of the automatic log-in to the GCP in S10 is different from the account that the user explicitly selects in S1, the printer 200 is registered in the default account different from the account that the user intends as the registered recipient of the printer 200 at that time and is selected in S1, which may lead to confusion of the user.

Although the GCP is described as an example above, similar problems may occur, even in another cloud service using the same registration process.

### First Example

A first example of a mechanism that handles such a problem will be described.

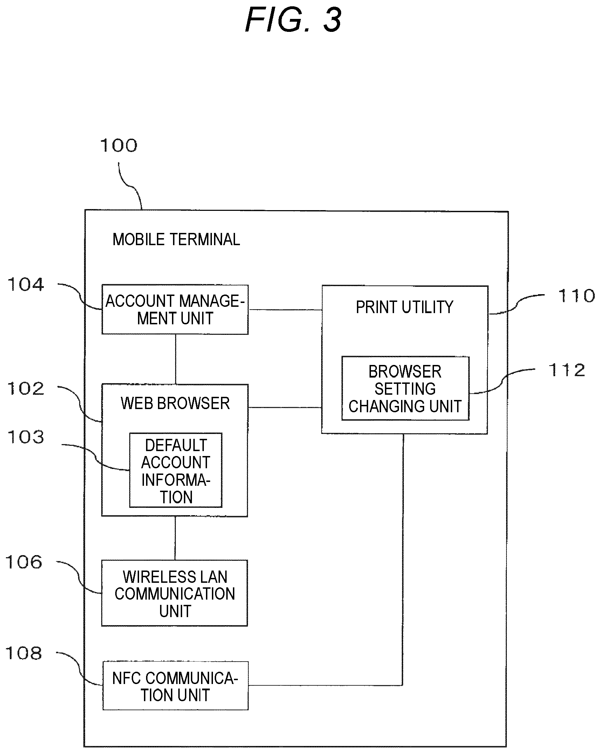

FIG. 3 illustrates a functional configuration about a printer registration to the cloud service 300, of the mobile terminal 100 according to the first example. As illustrated in FIG. 3, the mobile terminal 100 includes a web browser 102, an account management unit 104, a wireless LAN communication unit 106, a NFC communication unit 108, and a print utility 110.

The web browser 102 is a browser application program that is used to view the web page, and may be existing browser such as chrome (trademark) or Firefox (trademark). The web browser 102 has a function of saving default account information 103 for the cloud service 300. The default account information 103 is the information on the account that web browser 102 uses when the user recently logs in to the cloud service 300, and is removed, for example, if a predetermined effective period passes from the stored time point. The default account information 103 is one of the login account information that the web browser 102 saves for each access destination site.

The account management unit 104 manages the information on the account which is used when the user logs in to sites and services on the Internet 400. In a case where the operating system of the mobile terminal 100 is Android, the account manager corresponds to the account management unit 104.

The wireless LAN communication unit 106 is hardware and software that performs a process for communication in accordance with the wireless LAN standard.

The NFC communication unit 108 is hardware and software that performs a process for communications in accordance with the NFC standard.

The print utility 110 is an application program which performs various processes for utilizing the printer 200 through the cloud service 300, and has a processing function of registering the printer 200 in the cloud service 300, in terms of this exemplary embodiment.

The print utility 110 of the first example includes a browser setting changing unit 112. The browser setting changing unit 112 changes the setting of the web browser 102, in order to prevent the printer 200 from being registered in the cloud service 300 in association with the account which is not intended by the user.

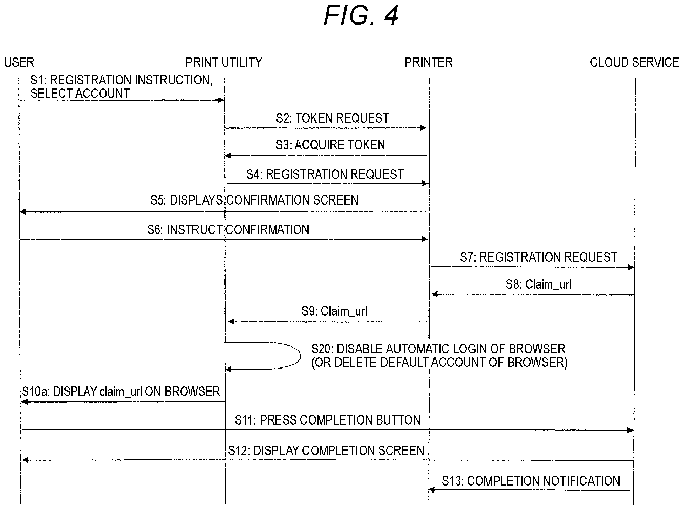

A flow of a printer registration in a case of using the print utility 110 of the first example will be described, with reference to FIG. 4.

Among sequences illustrated in FIG. 4, the same processes as the steps of the same signs in the example illustrated in FIG. 2 are performed in the respective steps of S1 to S9.

(S20) As the result of steps of S1 to S9, the print utility, 110, that receives the claim_url which is confirmation information for the printer registration confirmation that the cloud service 300 issues, changes the setting for the automatic login function of the web browser 102 to the setting in which the automatic login is not performed (disable automatic login), before passing the claim_url to the web browser 102.

(S10a) After this, the print utility 110 calls the web browser 102, and accesses the claim_url, similar to the example of FIG. 2. At this time, since the automatic login function of the web browser 102 is disabled, the web browser 102 transmits a simple HTTP GET request including the claim_url, and the cloud service 300 that receives this request redirects the request to the login page. Thus, the web browser 102 displays the login page on the screen of the mobile terminal 100, and the user enters own user ID and the password on the screen. In this case, the web browser 102 acquires a list of user IDs registered in the cloud service 300 from the account management unit 104, and may display the user IDs as candidates on the screen to allow the user to perform selection. If the user enters the user ID and the password on the login page and presses the send button, the information is transmitted to the cloud service 300 and authenticated; and if the authentication is successful, a registration confirmation web page is returned from the cloud service 300 to the web browser 102.

(S11) The user checks the information displayed on the displayed registration confirmation web page, and if the user confirms that the printer 200 is to be registered, the user presses the completion button on the page. Thus, the registration completion instruction is transmitted to the cloud service 300 from the web browser 102. Upon receiving the registration completion instruction, the cloud service 300 registers the printer 200 which is the instruction target, in association with the account that the user logs in at the time of the instruction, in other words, the account that the user manually enters in S10a.

(S12, S13) After the registration process, the GCP returns the completion screen web page indicating the completion of registration to the web browser of the mobile terminal 100, and sends a completion notification to the printer 200.

After the completion of registration, if the user logs in to the cloud service 300 by using the web browser 102, the web page on which the list of registered printers is displayed, including the printer 200 that is registered at this time, is returned from the cloud service 300 to the web browser 102. If the user selects any of the printers displayed on the list as an output destination, and gives a print instruction, the print data is provided from the cloud service 300 to the output destination, and printing is performed. In addition, if the user selects the printer 200 on the list and instructs the state acquisition, a web page indicating the status of the printer 200 is returned from the cloud service 300 to the web browser 102. The cloud service 300 obtains the information of the latest state from the printer 200, at a predetermined timing. In addition, a status acquisition request is transmitted from the print utility 110 of the mobile terminal 100 to the printer 200, and the status of the printer 200 may be acquired and displayed.

The configuration and the operation of the mobile terminal 100 of the first example are described above. In this example, since the automatic login function is disabled in S20, the user enters his or her account information on the login page in S10a to perform log-in, and performs confirmation on the registration confirmation page. Since the login is executed in the process of continuous works starting from tapping the NFC of the printer 200 (S1), the user recognizes the login of S10a as one of the printer registration works. Therefore, since the printer 200 is registered in the cloud service 300 in association with the account that the user enters at the time of the login is what the user intends. In contrast, the default account is an account which is completely separate from in the work of this printer registration, and is set during the previous web browsing, and it is considered that the user does not recognize which account is the default account in many cases.

In the above example, since the automatic login function of the web browser 102 is disabled in S20, instead thereof, the same effect can be obtained, even if a setting change of removing the default account for the cloud service 300 that the web browser 102 stores is performed in S20.

In the above example, although the browser setting changing unit 112 performs the setting change of disabling the automatic login function (S20), upon receiving the claim_url which is confirmation information from the cloud service 300, the timing is not essential. The timing of the setting change (S20) may be at any time after the registration process of the printer 200 is started in S1 until the claim_url which is confirmation information is passed to the web browser 102 in S10a.

In addition, in a case of performing the setting change of disabling the automatic login function of the web browser 102 or removing the default account in S20, the browser setting changing unit 112 may perform a process of returning the setting to the original setting thereafter. The timing to return the setting may be any time after the web browser 102 is called in S10a and the user performs login by entering the account information on the login page of the cloud service 300 displayed in the web browser 102.

### Second example

Next, a second example will be described.

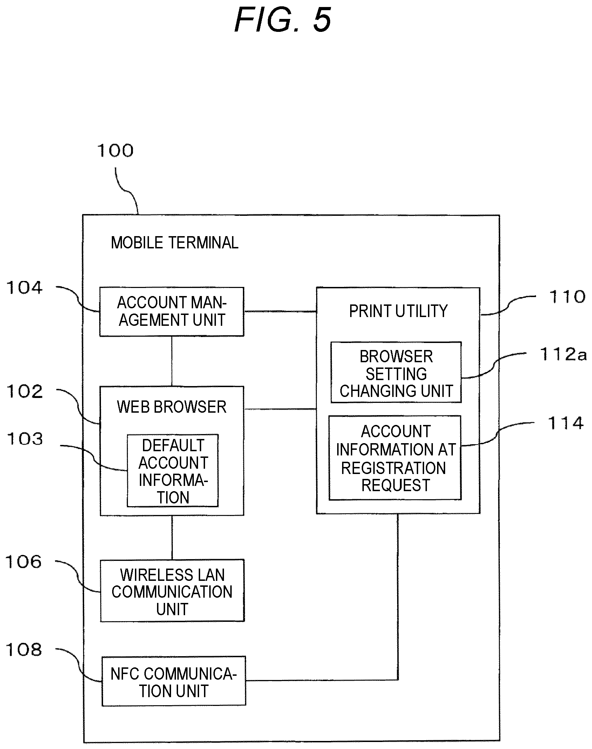

FIG. 5 illustrates a functional configuration about printer registration to the cloud service 300, of the mobile terminal 100 of the second example. The components in FIG. 5 similar to the components illustrated in FIG. 3 are denoted by the same reference numerals, and a redundant description will be omitted.

The print utility 110a in the example of FIG. 5 has a function of storing account information 114 at the time of registration request. The account information 114 at the time of registration request is the account selected by the user to send to the printer 200 in step S1 after the printer registration is started with NFC tapping. The browser setting changing unit 112a changes the setting from the default account for the cloud service 300 which is set in the web browser 102 to the account information 114 at the time of registration request.

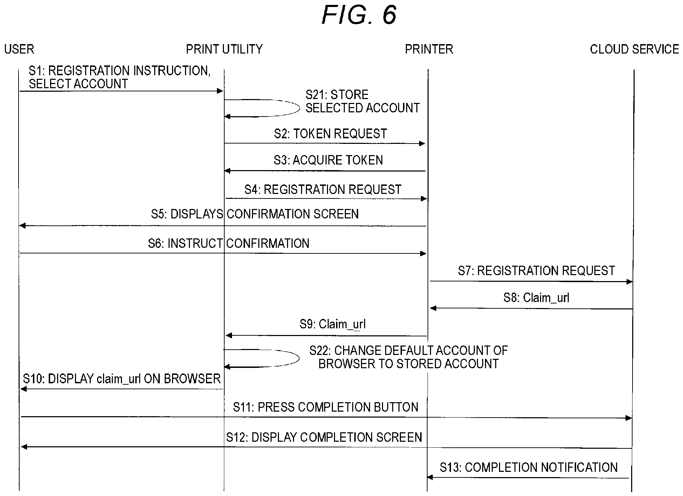

The flow of the process of the second example will be described with reference to FIG. 6.

In this process, at first, similar to the example of FIG. 2, the process of the printer registration is started by the NFC tap operation and the printer registration instruction of the user in S1, and the account that the user transmits to the printer 200 is selected in the selection dialog.

(S21) The print utility 110a stores the selected account as the account information 114 at the time of registration request.

The processes of S2 to S9 that follows may be the same as the example of FIG. 2. As the result of processes to S9, the print utility 110 which receives the claim_url that the cloud service 300 issues executes the process of S22 to be described later, before sending the claim_url to the web browser 102.

(S22) The browser setting changing unit 112a of the print utility 110a sets the value of the default account for the cloud service 300 which is set in the web browser 102, to the value stored in S21 which is indicated by the account information 114 at the time of registration request. In other words, in a case where the default account for the cloud service 300 is already set, the default account is changed into the account information 114 at the time of registration request. In addition, in a case where the default account for the cloud service 300 is not set, the account information 114 at the time of registration request may be set as the default account in the web browser 102.

(S10) Thereafter, the print utility 110 calls the web browser 102 to access the claim_url, similar to the example of FIG. 2. In this case, the account selected by the user in S1 (the account information 114 at the time of registration request) is set as the default account for the cloud service 300 in the web browser 102. Therefore, the web browser 102 automatically logs in to the cloud service 300 with the default account, and accesses the claim_url.

(S11 to S13) If the user performs an operation of pressing the completion button on the registration confirmation web page that is returned from the cloud service 300 by the access, the cloud service 300 registers the printer 200 in association with the account that is logged in. Then, the web browser 102 and the printer 200 are notified of completion.

The configuration and the operation of the mobile terminal 100 of the second example is described above. In this example, in a state in which the account selected by the user in S1 is set as the default account in S22, the web browser 102 automatically logs in to the cloud service 300 and performs a confirmation (completion) process of registration. Therefore, since the printer 200 is registered in association with the account that the user selects at first (S1) in the cloud service 300, the printer 200 is associated with the account as user's intention.

In the above example, although the browser setting changing unit 112a performs the setting change of the default account of the web browser 102 (S22) when receiving the claim_url which is the confirmation information from the cloud service 300, this timing is not essential. The timing of the setting change (S22) may be at any time after the registration process of the printer 200 is started in S1 until the claim_url which is confirmation information is passed to the web browser 102 in S10.

In a case of changing the setting of the default account of the web browser 102 in S22, the browser setting changing unit 112a may perform a process of returning the setting to the original setting thereafter (for example, returning the default account to the not-changed default account). The timing to return the setting may be any time after the web browser 102 is called in S10 and the web browser 102 automatically logs in to the cloud service 300.

In addition, as a modification example of the alternative to setting the account information 114 at the time of registration request to the default account, the account information 114 at the time of registration request may be set in the first on the list of choices of accounts displayed on the screen when the web browser 102 logs in to the cloud service 300. In other words, in this modification example, if the default account for the cloud service 300 is set in the web browser 102, the browser setting changing unit 112a removes the default account in S22. The account information 114 at the time of registration request is placed at the top of the choice list of the account of the user (since it is managed by the web browser 102 or the account management unit 104), corresponding to the account input field of the login page to the cloud service 300. Thus, when the web browser 102 accesses the claim_url in S10, the login page is first provided from the cloud service 300, and if the web browser 102 displays the login page, the account indicating the account information 114 at the time of registration request is displayed in the account input field of the page. If the user enters the password for the cloud service 300, corresponding to the account, in the password input field of the login page, and presses the send button, the web browser 102 logs in to the cloud service 300 with the account information 114 at the time of registration request, and acquires the registration confirmation web page indicated by the claim_url.

### Third example

Next, a third example will be described.

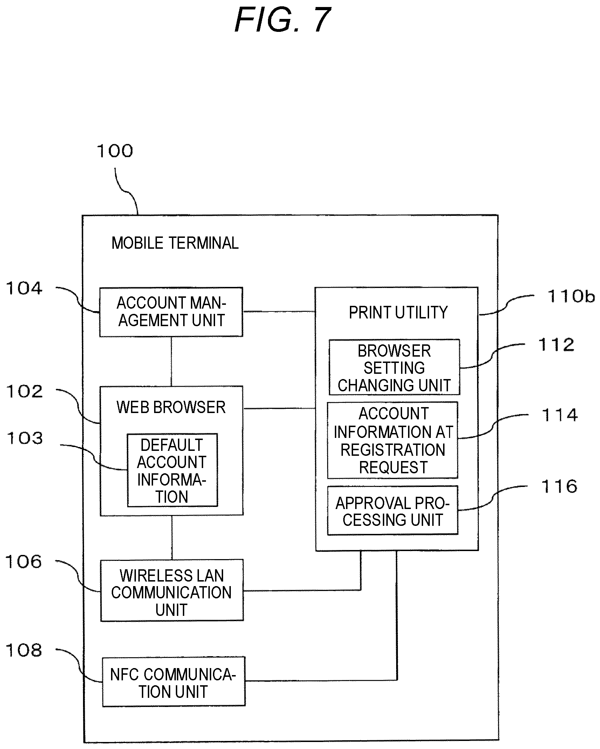

FIG. 7 illustrates a functional configuration about printer registration to the cloud service 300, of the mobile terminal 100 of the third example. The components in FIG. 7 similar to the components illustrated in FIG. 3 or FIG. 5 are denoted by the same reference numerals, and a redundant description will be omitted.

A print utility 110b illustrated in FIG. 7 has a function of saving the account information 114 at the time of registration request, and an approval processing unit 116. The account information 114 at the time of registration request is an account that the user selects in S1 to send to the printer 200, similar to the second example. The approval processing unit 116 automatically performs the process of confirming the printer registration, instead of the user. The approval processing unit 116 performs an approval process, in a case where confirmation information (referred to as "automatic approval confirmation information". automated _claim_url) for receiving the approval process by the application program (instead of the approval by the user's manual operation on the registration confirmation web page) is transmitted as confirmation information for the printer registration confirmation, in response to the registration request (S7) from the cloud service 300.

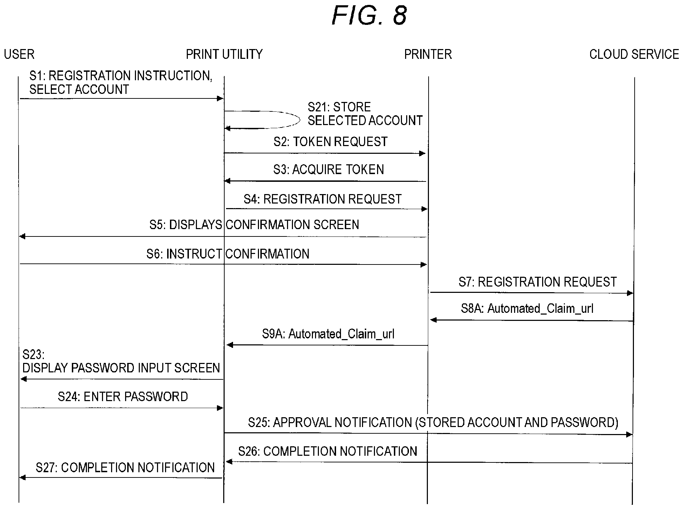

The flow of the process of the third example will be described with reference to FIG. 8. The steps of S1, S21 (storing the selected account in the print utility 110), and S2 to S7, among the flows illustrated in FIG. 8, are the same as the example of FIG. 1 or FIG. 6.

(S8A) The automatic approval confirmation information (automated_claim_url) is included in the contents for the registration request of S7, from the cloud service 300 to the printer 200. Incidentally, the response may include confirmation information for receiving a manual approval by the user (referred to as "manual approval confirmation information". claim_url), in addition to the automatic approval confirmation information.

(S9A) The printer 200 returns the confirmation information received from the cloud service 300 (including the automatic approval confirmation information), to the print utility 110 of the mobile terminal 100.

(S23) If the automatic approval confirmation information (automated_claim_url) is included in the confirmation information received from the printer 200, the print utility 110 calls the approval processing unit 116. The approval processing unit 116 displays a password input screen on the screen of the mobile terminal 100. The account (user ID) stored in S21 which is indicated by the account information 114 at the time of registration request and the password input field corresponding to the account are displayed on the password input screen.

(S24) The user enters the password corresponding to the account displayed on the password input field in the password input screen, and confirms the input.

(S25) The approval processing unit 116 sends an HTTP GET request including the account information 114 at the time of registration request and the input password, with the automatic approval confirmation information (automated_claim_url) as a recipient. This request is delivered to the cloud service 300. Upon receipt of the request, the cloud service 300 authenticates the account and password which are included in the request. If the authentication is successful, the cloud service 300 registers the printer 200 that is associated with the automatic approval confirmation information, in association with the account.

(S26) After this registration process, the cloud service 300 sends a completion notification indicating the fact of registration completion, to the approval processing unit 116. In addition, the notification of registration completion may also be sent to printer 200.

(S27) Upon the reception of the completion notification from the cloud service 300, the approval processing unit 116 displays the fact of the registration completion on the screen of the mobile terminal 100.

In a case where the automatic approval confirmation information (automated_claim_url) is not included in the response from the cloud service 300 in S8A, the print utility 110 may perform the processes of the above first example or the second example by using the manual approval confirmation information (claim_url).

The configuration and the operation of the mobile terminal 100 of the third example are described above. In this example, since the printer 200 is registered to the cloud service 300 in association with the account that the user selects in S1 by the processing of the approval processing unit 116, a problem that the printer is associated with the account which is not intended by the user is solved.

### Fourth example

Next, a fourth example will be described. This example is an example of the case of using the automatic approval confirmation information, similar to the third example. The configuration of the mobile terminal 100 of this example may be similar to the third example illustrated in FIG. 7. This example is different from the third example in the operation of the approval processing unit 116.

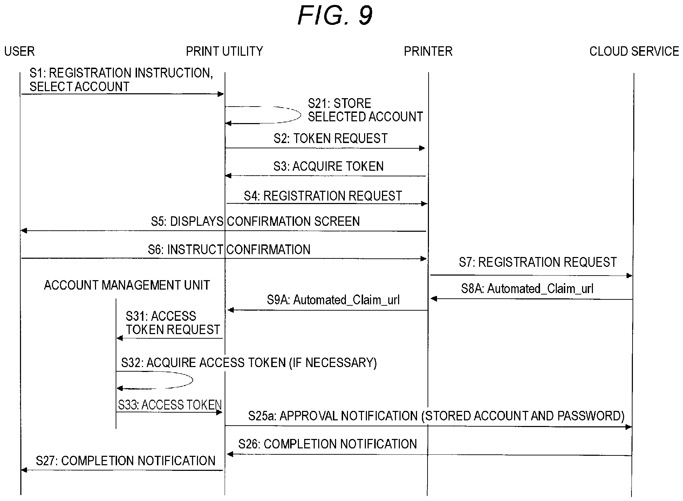

The flow of the process in this example is illustrated in FIG. 9. The respective steps of S1, S21, and S2 to S9A are similar to the example of FIG. 1 or FIG. 8.

(S31) If the approval processing unit 116 receives the automatic approval confirmation information (automated_claim_url) that the cloud service 300 issues (through the printer 200 in S9A), it makes a request for an access token to the account management unit 104. The access token is used in the protocol for secure authority approval, such as OAuth.

The access token that is requested in this case is information indicating the reception of transfer of a use authority that the account selected by the user in S1 has for the cloud service 300. In other words, the approval processing unit 116 passes the account (user ID) indicated by the account information 114 at the time of registration request, and the identification information of the cloud service 300 to the account management unit 104, and makes a request for an access token corresponding to a combination of the account and the cloud service 300. In addition, the authority of the requested access token is not all of the use authorities that the user has for the cloud service 300, and of course, may be limited only to the registration authority of the printer.

(S32) In a case where the requested access token is not acquired, or is acquired but the expiration date is passed by, the account management unit 104, that receives the request for the access token, performs processing for obtaining the access token from the user and the cloud service 300.

In this process, for example, the account management unit 104 redirects the user (the web browser 102) to a web page for issuing the access token of the cloud service 300. The setting of the web browser 102 is changed by the browser setting changing unit 112 in advance (in other words, after S1, and before the execution of S31) such that the login is made to the cloud service 300 with the account selected by the user in S1, at the time of access to the cloud service 300 through the redirect. In other words, the value of the default account for the cloud service 300 that the web browser 102 has is set (or changed) to the value indicated by the account information 114 at the time of registration request. As a result, during the redirect, the web browser 102 logs in to the cloud service 300 with the account indicated by the account information 114 at the time of registration request, and obtains a web page for issuing the access token. If the user gives an instruction to authorize the transfer of the authority (issuance of an access token) on its web page, the access token proving the authority transfer is issued from the cloud service 300 to the account management unit 104.

Incidentally, in a case where the account management unit 104 already has a target access token, and the expiration date of the access token is not passed by, when receiving the request of S32, it does not perform the acquisition process described above.

(S33) The account management unit 104 sends the acquired access token to the approval processing unit 116.

(S25a) The approval processing unit 116 sends an HTTP GET request including the access token, with the automatic approval confirmation information (automated_claim_url) as a recipient. This request is delivered to the cloud service 300. Upon receipt of the request, the cloud service 300 authenticates the access token included in the request. If the validation is successful, the cloud service 300 registers the printer 200 that is associated with the automatic approval confirmation information, in association with the account.

S26 and the subsequent steps may be the same as the above third example.

The configuration and the operation of the mobile terminal 100 of the third example are described above. Similar to the third example, even in this example, since the printer 200 is registered to the cloud service 300 in association with the account that the user selects in S1 by the processing of the approval processing unit 116, a problem that the printer is associated with the account which is not intended by the user is solved.

Although the above description is made using the case of registering the printer to the cloud service 300 as an example, the mechanism of the exemplary embodiment is also available for registering another type of equipment and software to the cloud service 300 for using the service.

Further, the terminal user uses is not limited to the mobile terminal 100, and may be a fixation device such as a stationary type of personal computer. Further, although the mobile terminal 100 exchanges data in response to a registration request with the printer 200 through the NFC and the wireless LAN, the data exchange between the terminal and equipment such as the printer may be made through a wired LAN.

The exemplary embodiment of the present invention is described above. The mobile terminal 100 described above is realized by the computer executing a program representing the functions described above. Here, the computer, for example, as hardware, has a circuit configuration in which a microprocessor such as a CPU, a memory (primary storage) such as a random access memory (RAM) and a read only memory (ROM), a flash memory and a solid state drive (SSD), a controller for controlling a fixed storage device such as a hard disk drive (HDD), various input and output (I/O) interface, a network interface for performing the control for connecting to the network such as a local area network are connected through, for example, a bus or the like. The program describing the processing contents of the respective functions is stored in the fixed storage device such as a flash memory through a network or the like, and is installed on the computer. The functional module group that is exemplified above can be realized by the program stored in the fixed storage device being read to RAM, and executed by the microprocessor such as a CPU.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims.

## Claims

1. An information processing apparatus (100) comprising:
a request transmitting unit that transmits a registration request for registering a device for a service which is provided from a service providing system (300), through a network (400), by using user information that is selected by a user from among a plurality of pieces of user information, wherein the request transmitting unit transmits the registration request through the device;
an acquiring unit that acquires registration confirmation information, (claim_url), the registration confirmation information (claim_url) being returned by the service providing system (300) via the device in response to the registration request, wherein the registration confirmation information (claim_url) is a URL of a registration confirmation web page by which the user expresses an intention of confirmation of completing the registration;
a first application configured to manage the plurality of user accounts and a second application to perform automatic log-in to the service providing system with default user information which has been set; and
an instruction unit that instructs the second application to access the registration confirmation information, (claim url), to acquire the registration confirmation web page;
wherein the instruction unit is further configured to
suppress the second application (102), when accessing the registration confirmation information (claim_url), from performing an automatic log-in to the service providing system (300) with the default user information, and
instruct the second application (102) to transmit a login request including the registration confirmation information (claim_url) to the service providing system; and
wherein the second application is configured to
receive a login page, receive user identification information and send the received user identification information to the service providing system,
receive the registration confirmation web page from the service providing system, when the user is authenticated, and
send, to the service providing system, a registration completion instruction for registering the device for using a service.

2. A computer program comprising instructions which, when the program is executed by a computer (100), cause the computer to execute a process for information processing, the process comprising:
transmitting a registration request for registering a device for a service which is provided from a service providing system (300), through a network (400), by using user information that is selected by a user from among a plurality of pieces of user information, wherein the registration request is transmitted through the device;
acquiring registration confirmation information, (claim_url), which is returned by the service providing system (300) via the device in response to the registration request, wherein the registration confirmation information (claim_url) is a URL of a registration confirmation web page by which the user expresses an intention of confirmation of completing the registration;
instructing a second application to access the registration confirmation information, (claim url), to acquire the registration confirmation web page, wherein the second application is an application to perform automatic log-in to the service providing system with default user information which has been set;
suppressing the second application (102), when accessing the registration confirmation information (claim_url), from performing the automatic log-in to the service providing system (300) with the default user information;
instructing the second application (102) to transmit a login request including the registration confirmation information (claim_url) to the service providing system (300);
receiving, by the second application (102), a login page and user identification information and sending the received user identification information to the service providing system (300);
receiving, by the second application (102), the registration confirmation web page from the service providing system (300), when the user is authenticated; and
sending, by the second application (102), to the service providing system (300), a registration completion instruction for registering the device for using a service.

3. An information processing method comprising:
transmitting a registration request for registering a device for a service which is provided from a service providing system (300), through a network (400), by using user information that is selected by a user from among a plurality of pieces of user information, wherein the registration request is transmitted through the device;
acquiring registration confirmation information, (claim_url), which is returned by the service providing system (300) via the device in response to the registration request, wherein the registration confirmation information (claim_url) is a URL of a registration confirmation web page by which the user expresses an intention of confirmation of completing the registration;
instructing a second application to access the registration confirmation information, (claim url), to acquire the registration confirmation web page, wherein the second application is an application to perform automatic log-in to the service providing system with default user information which has been set;
suppressing the second application (102), when accessing the registration confirmation information (claim_url), from performing the automatic log-in to the service providing system (300) with the default user information;
instructing the second application (102) to transmit a login request including the registration confirmation information (claim_url) to the service providing system (300);
receiving, by the second application (102), a login page and user identification information and sending the received user identification information to the service providing system (300),
receiving, by the second application (102), the registration confirmation web page from the service providing system (300), when the user is authenticated, and
sending, by the second application (102), to the service providing system (300), a registration completion instruction for registering the device for using a service.

## Patentansprüche

1. Informationsverarbeitungsvorrichtung (100), umfassend:
eine Anforderungsübertragungseinheit, die eine Registrierungsanforderung zum Registrieren einer Vorrichtung für einen Dienst, der von einem Dienstbereitstellungssystem (300) bereitgestellt wird, durch ein Netzwerk (400) unter Verwendung von Benutzerinformationen, die von einem Benutzer aus mehreren Benutzerinformationen ausgewählt werden, überträgt, wobei die Anforderungsübertragungseinheit die Registrierungsanforderung durch die Vorrichtung überträgt;
eine Erfassungseinheit, die Registrierungsbestätigungsinformationen (claim_url) erfasst, wobei die Registrierungsbestätigungsinformationen (claim_url) von dem Dienstbereitstellungssystem (300) via die Vorrichtung als Reaktion auf die Registrierungsanforderung zurückgegeben werden, wobei die Registrierungsbestätigungsinformationen (claim_url) eine URL einer Registrierungsbestätigungs-Webseite sind, durch die der Benutzer eine Absicht des Bestätigens des Abschließens der Registrierung ausdrückt;
eine erste Anwendung, die so konfiguriert ist, dass sie die mehreren Benutzerkonten verwaltet, und eine zweite Anwendung zum Durchführen von automatischem Anmelden bei dem Dienstbereitstellungssystem mit Standard-Benutzerinformationen, die eingestellt worden sind; und
eine Anweisungseinheit, die die zweite Anwendung anweist, auf die Registrierungsbestätigungsinformationen (claim_url) zuzugreifen, um die Registrierungsbestätigungs-Webseite zu erhalten;
wobei die Anweisungseinheit ferner so konfiguriert ist, dass sie die zweite Anwendung (102) daran hindert, wenn auf die Registrierungsbestätigungsinformationen (claim_url) zugegriffen wird, ein automatisches Anmelden bei dem Dienstbereitstellungssystem (300) mit den Standard-Benutzerinformationen durchzuführen, und
die zweite Anwendung (102) anweist, eine Anmeldeanforderung, die die Registrierungsbestätigungsinformationen (claim_url) enthält, an das Dienstbereitstellungssystem zu übertragen; und
wobei die zweite Anwendung so konfiguriert ist, dass sie
eine Anmeldeseite empfängt, Benutzeridentifikationsinformationen empfängt und die empfangenen Benutzeridentifikationsinformationen an das Dienstbereitstellungssystem sendet,
die Registrierungsbestätigungs-Webseite von dem Dienstbereitstellungssystem empfängt, wenn der Benutzer authentifiziert wird, und
eine Registrierungsabschlussanweisung zum Registrieren der Vorrichtung zum Verwenden eines Dienstes an das Dienstbereitstellungssystem sendet.

2. Computerprogramm, das Anweisungen umfasst, die, wenn das Programm von einem Computer (100) ausgeführt wird, den Computer veranlassen, einen Prozess zur Informationsverarbeitung auszuführen, wobei der Prozess umfasst:
Übertragen einer Registrierungsanforderung zum Registrieren einer Vorrichtung für einen Dienst, der von einem Dienstbereitstellungssystem (300) bereitgestellt wird, durch ein Netzwerk (400) durch Verwenden von Benutzerinformationen, die von einem Benutzer aus mehreren Benutzerinformationen ausgewählt werden, wobei die Registrierungsanforderung durch die Vorrichtung übertragen wird;
Erfassen von Registrierungsbestätigungsinformationen (claim_url), die von dem Dienstbereitstellungssystem (300) via die Vorrichtung als Reaktion auf die Registrierungsanforderung zurückgegeben werden, wobei die Registrierungsbestätigungsinformationen (claim_url) eine URL einer Registrierungsbestätigungs-Webseite sind, durch die der Benutzer eine Absicht der Bestätigung des Abschließens der Registrierung ausdrückt;
Anweisen einer zweiten Anwendung, auf die Registrierungsbestätigungsinformationen (claim_url) zuzugreifen, um die Registrierungsbestätigungs-Webseite zu erhalten, wobei die zweite Anwendung eine Anwendung zum Durchführen von automatischem Anmelden bei dem Dienstbereitstellungssystem mit Standard-Benutzerinformationen, die eingestellt worden sind, ist;
Verhindern, dass die zweite Anwendung (102), wenn auf die Registrierungsbestätigungsinformationen (claim_url) zugegriffen wird, das automatische Anmelden bei dem Dienstbereitstellungssystem (300) mit den Standard-Benutzerinformationen durchführt;
Anweisen der zweiten Anwendung (102), eine Anmeldeanforderung, die die Registrierungsbestätigungsinformationen (claim_url) enthält, an das Dienstbereitstellungssystem (300) zu übertragen;
Empfangen, durch die zweite Anwendung (102), einer Anmeldeseite und Benutzeridentifikationsinformationen und Senden der empfangenen Benutzeridentifikationsinformationen an das Dienstbereitstellungssystem (300);
Empfangen, durch die zweite Anwendung (102), der Registrierungsbestätigungs-Webseite von dem Dienstbereitstellungssystem (300), wenn der Benutzer authentifiziert wird; und
Senden, durch die zweite Anwendung (102), einer Registrierungsabschlussanweisung zum Registrieren der Vorrichtung zum Verwenden eines Dienstes an das Dienstbereitstellungssystem (300).

3. Informationsverarbeitungsverfahren, umfassend:
Übertragen einer Registrierungsanforderung zum Registrieren einer Vorrichtung für einen Dienst, der von einem Dienstbereitstellungssystem (300) bereitgestellt wird, durch ein Netzwerk (400) durch Verwenden von Benutzerinformationen, die von einem Benutzer aus mehreren Benutzerinformationen ausgewählt werden, wobei die Registrierungsanforderung durch die Vorrichtung übertragen wird;
Erfassen von Registrierungsbestätigungsinformationen (claim_url), die von dem Dienstbereitstellungssystem (300) via die Vorrichtung als Reaktion auf die Registrierungsanforderung zurückgegeben werden, wobei die Registrierungsbestätigungsinformationen (claim_url) eine URL einer Registrierungsbestätigungs-Webseite sind, durch die der Benutzer eine Absicht der Bestätigung des Abschließens der Registrierung ausdrückt;
Anweisen einer zweiten Anwendung, auf die Registrierungsbestätigungsinformationen (claim_url) zuzugreifen, um die Registrierungsbestätigungs-Webseite zu erhalten, wobei die zweite Anwendung eine Anwendung zum Durchführen von automatischem Anmelden bei dem Dienstbereitstellungssystem mit Standard-Benutzerinformationen, die eingestellt worden sind, ist;
Verhindern, dass die zweite Anwendung (102), wenn auf die Registrierungsbestätigungsinformationen (claim_url) zugegriffen wird, das automatische Anmelden bei dem Dienstbereitstellungssystem (300) mit den Standard-Benutzerinformationen durchführt;
Anweisen der zweiten Anwendung (102), eine Anmeldeanforderung, die die Registrierungsbestätigungsinformationen (claim_url) enthält, an das Dienstbereitstellungssystem (300) zu übertragen;
Empfangen, durch die zweite Anwendung (102), einer Anmeldeseite und Benutzeridentifikationsinformationen und Senden der empfangenen Benutzeridentifikationsinformationen an das Dienstbereitstellungssystem (300);
Empfangen, durch die zweite Anwendung (102), der Registrierungsbestätigungs-Webseite von dem Dienstbereitstellungssystem (300), wenn der Benutzer authentifiziert wird; und
Senden, durch die zweite Anwendung (102), einer Registrierungsabschlussanweisung zum Registrieren der Vorrichtung zum Verwenden eines Dienstes an das Dienstbereitstellungssystem (300).

## Revendications

1. Appareil de traitement d'informations (100) comprenant :
une unité de transmission de requête qui transmet, via un réseau (400), une requête d'enregistrement pour enregistrer un dispositif pour un service qui est fourni par un système de fourniture de services (300), en utilisant des informations utilisateur qui sont sélectionnées par un utilisateur parmi une pluralité d'éléments d'informations utilisateur, dans lequel l'unité de transmission de requête transmet la requête d'enregistrement via le dispositif ;
une unité d'acquisition qui acquiert des informations de confirmation d'enregistrement, (claim_url), les informations de confirmation d'enregistrement (claim_url) étant renvoyées par le système de fourniture de services (300) via le dispositif en réponse à la requête d'enregistrement, dans lequel les informations de confirmation d'enregistrement (claim_url) sont une URL d'une page web de confirmation d'enregistrement par laquelle l'utilisateur exprime une intention de confirmer la finalisation de l'enregistrement ;
une première application configurée pour gérer la pluralité de comptes utilisateur et une deuxième application pour effectuer une connexion automatique au système de fourniture de services avec des informations utilisateur par défaut qui ont été définies ; et
une unité d'instruction qui ordonne à la deuxième application d'accéder aux informations de confirmation d'enregistrement, (claim_url), afin d'acquérir la page web de confirmation d'enregistrement ;
dans lequel l'unité d'instruction est en outre configurée pour
empêcher la deuxième application (102), lors de l'accès aux informations de confirmation d'enregistrement (claim_url), d'effectuer une connexion automatique au système de fourniture de services (300) avec les informations utilisateur par défaut, et ordonner à la deuxième application (102) de transmettre une requête de connexion incluant les informations de confirmation d'enregistrement (claim_url) au système de fourniture de services ; et
dans lequel la deuxième application est configurée pour
recevoir une page de connexion, recevoir des informations d'identification utilisateur et envoyer les informations d'identification d'utilisateur reçues au système de fourniture de services,
recevoir la page web de confirmation d'enregistrement du système de fourniture de services, lorsque l'utilisateur est authentifié, et
envoyer, au système de fourniture de services, une instruction de finalisation d'enregistrement pour enregistrer le dispositif pour utiliser un service.

2. Programme informatique comprenant des instructions qui, lorsque le programme est exécuté par un ordinateur (100), amènent l'ordinateur à exécuter un processus de traitement d'informations, le processus comprenant :
transmettre, via un réseau (400), une requête d'enregistrement pour enregistrer un dispositif pour un service qui est fourni par un système de fourniture de services (300), en utilisant des informations utilisateur qui sont sélectionnées par un utilisateur parmi une pluralité d'éléments d'informations utilisateur, dans lequel la requête d'enregistrement est transmise via le dispositif ;
acquérir des informations de confirmation d'enregistrement, (claim_url), qui sont renvoyées par le système de fourniture de services (300) via le dispositif en réponse à la requête d'enregistrement, dans lequel les informations de confirmation d'enregistrement (claim_url) sont une URL d'une page web de confirmation d'enregistrement par laquelle l'utilisateur exprime une intention de confirmer la finalisation de l'enregistrement ;
ordonner à une deuxième application d'accéder aux informations de confirmation d'enregistrement, (claim_url), afin d'acquérir la page web de confirmation d'enregistrement, dans lequel la deuxième application est une application pour effectuer une connexion automatique au système de fourniture de services avec des informations utilisateur par défaut qui ont été définies ;
empêcher la deuxième application (102), lors de l'accès aux informations de confirmation d'enregistrement (claim_url), d'effectuer la connexion automatique au système de fourniture de services (300) avec les informations utilisateur par défaut ;
ordonner à la deuxième application (102) de transmettre une requête de connexion incluant les informations de confirmation d'enregistrement (claim_url) au système de fourniture de services (300) ;
recevoir, par la deuxième application (102), une page de connexion et des informations d'identification d'utilisateur et envoyer les informations d'identification d'utilisateur reçues au système de fourniture de services (300) ;
recevoir, par la deuxième application (102), la page web de confirmation d'enregistrement du système de fourniture de services (300), lorsque l'utilisateur est authentifié ; et
envoyer, par la deuxième application (102), au système de fourniture de services (300), une instruction de finalisation d'enregistrement pour enregistrer le dispositif pour utiliser un service.

3. Procédé de traitement d'informations comprenant :
transmettre, via un réseau (400), une requête d'enregistrement pour enregistrer un dispositif pour un service qui est fourni par un système de fourniture de services (300), en utilisant des informations utilisateur qui sont sélectionnées par un utilisateur parmi une pluralité d'éléments d'informations utilisateur, dans lequel la requête d'enregistrement est transmise via le dispositif ;
acquérir des informations de confirmation d'enregistrement, (claim_url), qui sont renvoyées par le système de fourniture de services (300) via le dispositif en réponse à la requête d'enregistrement, dans lequel les informations de confirmation d'enregistrement (claim_url) sont une URL d'une page web de confirmation d'enregistrement par laquelle l'utilisateur exprime une intention de confirmer la finalisation de l'enregistrement ;
ordonner à une deuxième application d'accéder aux informations de confirmation d'enregistrement, (claim_url), afin d'acquérir la page web de confirmation d'enregistrement, dans lequel la deuxième application est une application pour effectuer une connexion automatique au système de fourniture de services avec des informations utilisateur par défaut qui ont été définies ;
empêcher la deuxième application (102), lors de l'accès aux informations de confirmation d'enregistrement (claim_url), d'effectuer la connexion automatique au système de fourniture de services (300) avec les informations utilisateur par défaut ;
ordonner à la deuxième application (102) de transmettre une requête de connexion incluant les informations de confirmation d'enregistrement (claim_url) au système de fourniture de services (300) ;
recevoir, par la deuxième application (102), une page de connexion et des informations d'identification d'utilisateur et envoyer les informations d'identification d'utilisateur reçues au système de fourniture de services (300) ;
recevoir, par la deuxième application (102), la page web de confirmation d'enregistrement du système de fourniture de services (300), lorsque l'utilisateur est authentifié ; et
envoyer, par la deuxième application (102), au système de fourniture de services (300), une instruction de finalisation d'enregistrement pour enregistrer le dispositif pour utiliser un service.
